# EUROPÄISCHE PATENTSCHRIFT

(11) **EP 2 193 590 B1**
(45) Veröffentlichungstag und Bekanntmachung des Hinweises auf die Patenterteilung: **26.10.2011**
(21) Anmeldenummer: 07818707.7
(22) Anmeldetag: 27.09.2007
(51) Int. Cl.: H02J 13/00

(54) **GERÄT ZUM SCHÜTZEN, STEUERN ODER ÜBERWACHEN EINER ELEKTRISCHEN SCHALT- ODER ENERGIEVERSORGUNGSANLAGE SOWIE VERFAHREN ZU DESSEN BETRIEB**
APPLIANCE FOR PROTECTING, CONTROLLING OR MONITORING AN ELECTRICAL SWITCHGEAR OR ENERGY SUPPLY SYSTEM, AND METHOD FOR THE OPERATION THEREOF
APPAREIL PERMETTANT DE PROTÉGER, DE COMMANDER OU DE SURVEILLER UNE INSTALLATION DE COMMUTATION ÉLECTRIQUE OU D'ALIMENTATION ÉLECTRIQUE ET PROCÉDÉ PERMETTANT DE LE FAIRE FONCTIONNER

(43) Veröffentlichungstag der Anmeldung: 09.06.2010
(73) Patentinhaber: Siemens Aktiengesellschaft, 80333 München (DE)
(72) Erfinder: DAWIDCZAK, Henry, 91580 Petersaurach (DE); ENGLERT, Heiko, 90559 Burgthann (DE)
(86) Internationale Anmeldenummer: PCT/EP2007/008629
(87) Internationale Veröffentlichungsnummer: WO 2009/046732

(56) Entgegenhaltungen:
- EP-A- 0 853 368
- WO-A-2006/060371
- US-A1- 2004 193 329

## Beschreibung

Gerät zum Schützen, Steuern oder Überwachen einer elektrischen Schalt- oder Energieversorgungsanlage sowie Verfahren zu dessen Betrieb

Die Erfindung bezieht sich auf ein Gerät zum Schützen, Steuern oder Überwachen einer elektrischen Schalt- oder Energieversorgungsanlage, wobei das Gerät als Client-Gerät konfigurierbar ist und zu einer Kommunikation mit einem zugeordneten Server-Gerät geeignet ist. Ein solches als Client-Gerät konfigurierbares Gerät wird nachfolgend kurz als Client-Gerät bezeichnet. Das Dokument US-A1-2004 /01933321 zeigt ein solches Client-Gerät, entsprechend dem vorzeichnenden Teil des Anspruchs 1.

Zum Schützen, Steuern und Überwachen von elektrischen Schaltoder Energieversorgungsanlagen werden bekanntermaßen Stationsautomatisierungssysteme eingesetzt. Ein solches Stationsautomatisierungssystem weist Geräte, wie Feld-, Schutz- oder Stationsgeräte auf, die zur Erfüllung ihrer Aufgaben untereinander Informationen austauschen. Zum Austausch von Informationsobjekten wird eine vorgegebene Kommunikationstechnologie mit einem Übertragungsmedium und mit einem Kommunikationsprotokoll eingesetzt. Beispielsweise kann bei Stationsautomatisierungssystemen das Kommunikationsprotokoll nach dem IEC 61850-Standard verwendet werden.

Die Kommunikation nach dem IEC 61850-Standard basiert auf dem Austausch von Informationsobjekten, die in den Datenmodellen der eingesetzten Geräte implementiert sind. Die Datenmodelle der Geräte spiegeln die Funktionen aus Sicht der verwendeten Geräte der jeweiligen Hersteller wieder. Da das Strukturieren und der Umfang der Gerätefunktionen von der jeweiligen herstellerspezifischen Funktionsimplementierung bestimmt werden, unterscheiden sich die einzelnen Datenmodelle und das daraus resultierende Adressierungsschema der zu übertragenden Informationsobjekte. Bei Geräten unterschiedlicher Hersteller unterscheiden sich somit im Allgemeinen die Adressierungsschemata, obwohl die Geräte vergleichbare Schutz- und Steuerungsfunktionen anbieten. Bei derzeit bekannten Geräten zum Schützen, Steuern und Überwachen elektrischer Schalt- oder Energieversorgungsanlagen ist es aufgrund der unterschiedlichen Adressierungsschemata von Geräten unterschiedlicher Hersteller mitunter sehr aufwendig, ein in der Anlage vorhandenes (altes) Gerät durch ein neues Gerät auszutauschen, da nämlich im Allgemeinen nicht nur das von der Änderung betroffene Gerät in seiner Parametrierung angepasst werden muss, sondern darüber hinaus alle anderen Geräte, die mit diesem Gerät Daten austauschen, nämlich deshalb, weil sich das Datenmodell des neuen Gerätes von dem des alten Gerätes im Allgemeinen unterscheiden wird.

Aus diesem Grunde erfordert ein Austausch eines Geräts einer elektrischen Schalt- oder Energieversorgungsanlage in der Regel eine Vielzahl an Schritten, wie beispielsweise folgende:
- Aktualisieren der Anlagenkonfiguration in einem Systemkonfigurator zur Berücksichtigung eines geänderten Datenmodells,
- Elektrisches Freischalten aller derjenigen Felder der elektrischen Schalt- oder Energieversorgungsanlage, deren Geräte von der Neuparametrierung betroffen sind,
- Deaktivieren der Kommunikation aller Geräte, die von einer Neuparametrierung betroffen sind,
- Aktualisieren der Geräteparametrierung aller betroffenen Geräte,
- Durchführen eines Geräteneustarts aller neu parametrierten Geräte,
- Prüfen der korrekten Funktion der neu parametrierten Geräte (Schutzprüfung, Bittest, Funktionsprüfung) und
- Zuschalten der freigeschalteten Felder der Schalt- oder Energieversorgungsanlage.

Die beschriebene Austauschprozedur verursacht einen erheblichen Parametrier- und Prüfaufwand. Da der Anlagenbetrieb für die Dauer des Geräteaustauschs eingeschränkt ist, sind zusätzliche organisatorische Maßnahmen, wie z. B. das Beantragen von Freischaltterminen zum Freischalten der Schalt- oder Energieversorgungsanlage, erforderlich. Das beschriebene Freischalten von Feldern wird daher in elektrischen Übertragungsnetzen nur sehr ungern durchgeführt, so dass Freischaltungen in der Regel zumindest ein Jahr im Voraus bei der zuständigen Last-Managementstelle der betroffenen Felder angemeldet werden müssen. Auch verursachen Freischaltungen Fahrplanänderungen des Last-Managements, die im Allgemeinen zu nicht unerhebliche Ausfallkosten führen, denn im Falle einer Freischaltung reduziert sich in der Regel die Transportkapazität des Übertragungsnetzes.

Der Erfindung liegt demgemäß die Aufgabe zugrunde, ein Gerät zum Schützen, Steuern oder Überwachen einer elektrischen Schalt- oder Energieversorgungsanlage anzugeben, das derart aufgebaut ist, dass dieses an ein ersetztes Server-Gerät mit möglichst wenig Aufwand anpassbar ist.

Diese Aufgabe wird ausgehend von einem Client-Gerät der eingangs beschriebenen Art erfindungsgemäß durch die kennzeichnenden Merkmale des Anspruchs 1 gelöst. Vorteilhafte Ausgestaltungen des erfindungsgemäßen Client-Gerätes sind in Unteransprüchen angegeben.

Danach ist erfindungsgemäß vorgesehen, dass das Client-Gerät ein serverunabhängiges Betriebsprogrammmodul, ein mit dem Betriebsprogrammmodul verknüpftes serverunabhängiges Schnittstellenprogrammmodul und ein die Adressierungsweise des Server-Geräts beschreibendes serverabhängiges Kommunikationsmodul aufweist, wobei in das Schnittstellenprogrammmodul und/oder in das Kommunikationsmodul eine Bezugsangabe eingebbar ist, die zwischen dem serverunabhängigen Schnittstellenprogrammmodul und dem serverabhängigen Kommunikationsmodul eine Verknüpfung herstellt, mit der eine Kommunikation zwischen dem Betriebsprogrammmodul und dem Kommunikationsmodul unter Vermittlung des Schnittstellenprogrammmoduls ermöglicht wird.

Ein wesentlicher Vorteil des erfindungsgemäßen Client-Geräts ist darin zu sehen, dass dieses eine Modulstruktur aufweist, die serverunabhängige und serverabhängige Module umfasst, wobei diese lediglich durch eine Bezugseingabe miteinander verknüpft werden. Aufgrund dieses Modulaufbaus ist es möglich, das Client-Gerät an ein neues oder ausgetauschtes Server-Gerät mit nur sehr wenig Aufwand anzupassen, da nämlich lediglich das serverabhängige Kommunikationsmodul sowie die Bezugsangabe geändert werden müssen. Das serverunabhängige Betriebsprogrammmodul sowie das serverunabhängige Schnittstellenprogrammmodul können hingegen unverändert bleiben. Auch müssen andere Server-Geräte, die mit dem Client-Gerät verbunden sind, nicht umkonfiguriert werden, da das Client-Gerät für diese anderen Server-Geräte unverändert bleibt.

In der erfindungsgemäβen Ausgestaltung des Client-Geräts ist vorgesehen, dass das serverunabhängige Schnittstellenprogrammmodul und das serverabhängige Kommunikationsmodul derart ausgestaltet sind, dass nach einem Ersetzen eines dem Client-Gerät zugeordneten Server-Geräts durch ein neues Server-Gerät das in dem Client-Gerät vorhandene Kommunikationsmodul durch ein die Adressierungsweise des neuen Server-Geräts beschreibendes neues Kommunikationsmodul und in dem serverunabhängigen Schnittstellenprogrammmodul die vorhandene Bezugsangabe durch eine neue, sich auf das neue Kommunikationsmodul beziehende Bezugsangabe ersetzt werden kann. Durch die vorgesehene Ersetzbarkeit bzw. Austauschbarkeit des serverabhängigen Kommunikationsmoduls sowie der Bezugsangabe ist es sehr einfach möglich, das Client-Gerät mit einem neuen Server-Gerät zu verbinden.

Vorzugsweise verwendet das serverunabhängige Schnittstellenprogrammmodul eine funktionsbezogene geräteunabhängige Adressierung und das serverabhängige Kommunikationsmodul eine geräteabhängige Adressierung, wobei erst durch die Bezugsangabe eine eine Kommunikation ermöglichende, vollständige Adresszuweisung gebildet wird. Durch die Funktionsbezogenheit des Schnittstellenprogrammmoduls und die Geräteabhängigkeit des Kommunikationsmoduls ist eine optimale Entkopplung erreicht, so dass die Anpassbarkeit des Client-Gerätes an ein neues Server-Gerät noch weiter vereinfacht wird.

Die funktionsbezogene geräteunabhängige Adressierung des serverunabhängigen Schnittstellenprogrammmoduls entspricht vorzugsweise dem so genannten "Functional-Naming-Adressierungsschema" gemäß IEC 61850-6-Standard.

Die geräteabhängige Adressierung des serverabhängigen Kommunikationsmoduls entspricht bevorzugt dem so genannten "Product-Naming-Adressierungsschema" gemäß IEC 61850-Standard.

Die Bezugsangabe ist vorzugsweise geeignet, eine Zuordnung zwischen dem Functional-Naming-Adressierungsschema gemäß IEC 61850-6-Standard und dem Product-Naming-Adressierungsschema gemäß IEC 61850-Standard zu definieren.

Besonders bevorzugt ist in dem Schnittstellenprogrammmodul die Bezugsangabe derart ersetzbar, dass das Schnittstellenprogrammmodul im Übrigen unverändert bleiben kann.

Im Hinblick auf den Einsatz des Client-Gerätes in elektrischen Schalt- und Energieversorgungsanlagen wird es als vorteilhaft angesehen, wenn das Client-Gerät durch ein Leitebenen-Gerät oder ein Feldgerät, insbesondere ein Schutzgerät, einer elektrischen Schalt- oder Energieversorgungsanlage gebildet wird.

Besonders bevorzugt weist das Client-Gerät ein Importmodul auf, das geeignet ist, einen Anschluss eines neuen Server-Geräts selbsttätig zu erkennen, ein servereigenes Kommunikationsmodul des neuen Server-Geräts ganz oder in Teilen zu laden, das serverabhängige Kommunikationsmodul des Client-Geräts durch ein neues serverabhängiges Kommunikationsmodul zu ersetzen und die Bezugsangabe in dem serverunabhängigen Schnittstellenprogrammmodul an das neue serverabhängige Kommunikationsmodul anzupassen. Bei der letztgenannten Ausgestaltung des Client-Geräts lässt sich somit ein automatisiertes Aktualisieren des serverabhängigen Kommunikationsmoduls sowie der Bezugsangabe erreichen, sobald ein neues Server-Gerät an das Client-Gerät angeschlossen wird.

Alternativ oder zusätzlich kann das Client-Gerät eine Eingabeschnittstelle aufweisen, die es ermöglicht, vor, nach oder während eines Anschlusses eines neuen Server-Geräts ein Kommunikationsmodul für das neue Server-Gerät von außen einzuspeisen und/oder die Bezugsangabe in dem serverunabhängigen Schnittstellenprogrammmodul an das neue Kommunikationsmodul von außen anzupassen.

Die Erfindung bezieht sich darüber hinaus auf eine Anordnung mit einem Client-Gerät, wie es oben beschrieben wurde, sowie mit einem damit verbundenen Server-Gerät.

Vorzugsweise weist das Server-Gerät ein serverabhängiges Kommunikationsmodul auf, das von dem Client-Gerät auslesbar oder kopierbar ist.

Bezüglich einer solchen Anordnung wird es außerdem als vorteilhaft angesehen, wenn das Server-Gerät durch ein Leitebenen-Gerät oder ein Feldgerät, insbesondere ein Schutzgerät, einer Schalt- oder Energieversorgungsanlage gebildet ist. Beispielsweise kann es sich bei dem Client-Gerät um ein Leitebenen-Gerät und bei dem Server-Gerät um ein Feldgerät, insbesondere ein Schutzgerät, handeln.

Die Erfindung bezieht sich darüber hinaus auf ein Verfahren zum Betreiben einer Anordnung, insbesondere einer Anordnung zum Schützen, Steuern oder Überwachen einer elektrischen Schalt- oder Energieversorgungsanlage, mit einem Client-Gerät und zumindest einem mit diesem verbundenen Server-Gerät, wobei bei dem Verfahren das Server-Gerät durch ein neues Server-Gerät ersetzt und die Anordnung mit diesem neuen Server-Gerät weiter betrieben wird.

Erfindungsgemäß ist bei einem solchen Verfahren vorgesehen, dass in dem Client-Gerät ein serverunabhängiges Betriebsprogrammmodul, ein mit dem Betriebsprogrammmodul verknüpftes serverunabhängiges Schnittstellenprogrammmodul und ein die Adressierungsweise des Server-Geräts beschreibendes serverabhängiges Kommunikationsmodul betrieben wird, wobei in das Schnittstellenprogrammmodul eine Bezugsangabe eingegeben worden ist, die zwischen dem Schnittstellenprogrammmodul und dem Kommunikationsmodul eine Verknüpfung herstellt, mit der eine Kommunikation zwischen dem Betriebsprogrammmodul und dem Kommunikationsmodul unter Vermittlung des Schnittstellenprogrammmoduls ermöglicht wird, nach dem Ersetzen des alten Server-Geräts durch das neue Server-Gerät das in dem Client-Gerät vorhandene Kommunikationsmodul durch ein die Adressierungsweise des neuen Server-Geräts beschreibendes neues Kommunikationsmodul ersetzt wird und in dem serverunabhängigen Schnittstellenprogrammmodul die Bezugsangabe durch eine neue, sich auf das neue Kommunikationsmodul beziehende Bezugsangabe ersetzt wird.

Bezüglich der Vorteile des erfindungsgemäßen Verfahrens sei auf die obigen Ausführungen im Zusammenhang mit dem erfindungsgemäßen Client-Gerät verwiesen, da die Vorteile des erfindungsgemäßen Client-Geräts denen des erfindungsgemäßen Verfahrens im Wesentlichen entsprechen.

Vorzugsweise wird bei dem Ersetzen der Bezugsangabe in dem Schnittstellenprogrammmodul das Schnittstellenprogrammmodul im Übrigen unverändert gelassen, um den Anpassungsaufwand so weit wie möglich zu minimieren.

Vorzugsweise wird im Rahmen des Verfahrens das Client-Gerät als Leitebenen-Gerät oder Feldgerät, insbesondere Schutzgerät, einer elektrischen Schalt- oder Energieversorgungsanlage und das Server-Gerät ebenfalls als Leitebenen-Gerät oder Feldgerät, insbesondere Schutzgerät, derselben Schalt- oder Energieversorgungsanlage betrieben und dieses Server-Leitebenen-Gerät oder Server-Feldgerät in der beschriebenen Weise durch ein neues Server-Leitebenen-Gerät oder ein neues Server-Feldgerät ersetzt.

Die Erfindung wird nachfolgend anhand von Ausführungsbeispielen näher erläutert. Dabei zeigen beispielhaft
- Figur 1: ein Ausführungsbeispiel für eine Anordnung mit Client-Geräten und Server-Geräten,
- Figur 2: ein Ausführungsbeispiel für den Modulaufbau eines Client-Geräts und den eines Server-Geräts näher im Detail,
- Figuren 3-5: ein Ausführungsbeispiel für das Umkonfigurieren des Client-Geräts gemäß Figur 2 nach Anschluss eines neuen Server-Geräts,
- Figur 6: ein weiteres Ausführungsbeispiel für das Umkonfigurieren eines Client-Geräts,
- Figur 7: ein drittes Ausführungsbeispiel für das Umkonfigurieren eines Client-Geräts und
- Figur 8: ein Ausführungsbeispiel für ein serverunabhängigen Schnittstellenmodul, ein serverabhängiges Kommunikationsmodul sowie eine die beiden Modulen verknüpfende Bezugsangabe.

In den Figuren werden der Übersicht halber für identische oder vergleichbare Komponenten stets dieselben Bezugszeichen verwendet.

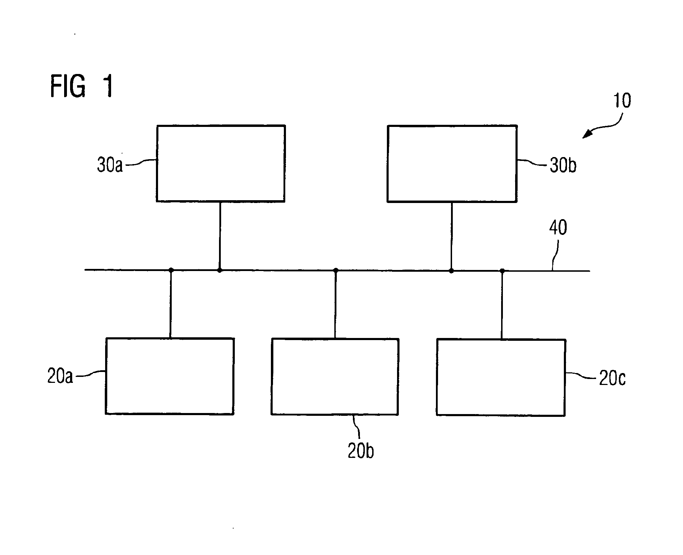

In der Figur 1 ist ein Ausführungsbeispiel für ein Stationsautomatisierungssystem 10 gezeigt, das zum Schützen, Steuern oder Überwachen einer nicht weiter dargestellten elektrischen Schalt- oder Energieversorgungsanlage geeignet ist. Das Stationsautomatisierungssystem 10 umfasst drei Server-Geräte 20a, 20b und 20c sowie zwei Client-Geräte 30a und 30b, die durch ein Kommunikationsnetz 40 miteinander in Verbindung stehen. Bei den Server-Geräten 20a, 20b und 20c kann es sich beispielsweise um Feldgeräte, insbesondere Schutzgeräte, handeln. Die Client-Geräte 30a und 30b werden beispielsweise durch Leitebenen-Geräte gebildet.

Wird nun eines der Server-Geräte 20a, 20b oder 20c durch ein neues Server-Gerät ersetzt, so müssen die mit dem ausgetauschten Server-Gerät verbundenen Client-Geräte entsprechend informiert und umkonfiguriert werden. Dies soll nachfolgend anhand von Beispielen näher erläutert werden, bei denen beispielhaft davon ausgegangen wird, dass das Server-Gerät 20a durch ein neues Server-Gerät 20a' ersetzt wird und das zugehörige Client-Gerät 30a entsprechend umkonfiguriert wird.

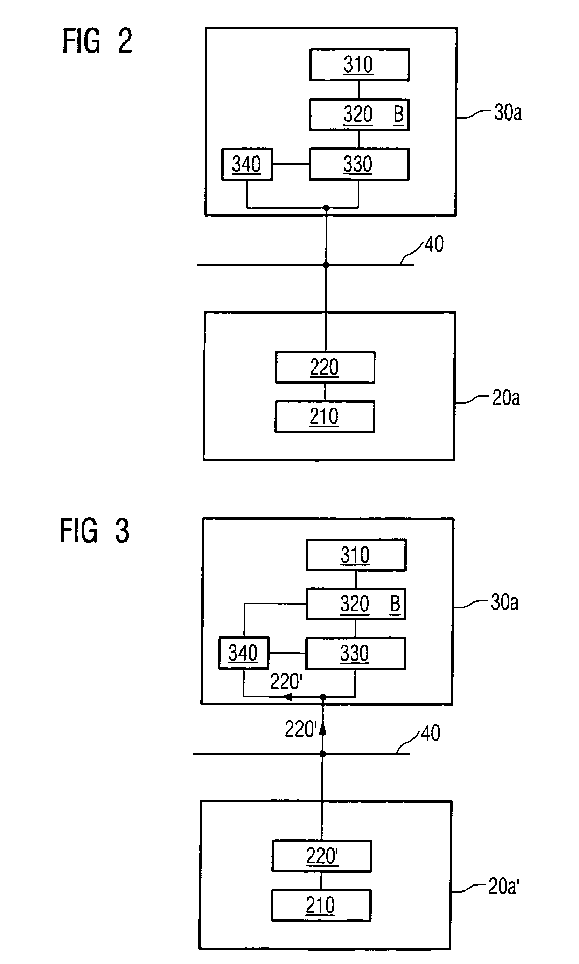

Die Figur 2 zeigt beispielhaft den inneren Modulaufbau des Server-Geräts 20a sowie den des Client-Geräts 30a näher im Detail. Man erkennt, dass das Server-Gerät 20a ein Applikationsmodul 210 sowie ein servereigenes Kommunikationsmodul 220 umfasst.

Das Client-Gerät 30a weist ein serverunabhängiges Betriebsprogrammmodul 310, ein serverunabhängiges Schnittstellenprogrammmodul 320 sowie ein serverabhängiges Kommunikationsmodul 330 auf. Außerdem ist zu erkennen, dass in dem serverunabhängigen Schnittstellenprogrammmodul 320 eine Bezugsangabe B enthalten ist, die das als solches serverunabhängige Schnittstellenprogrammmodul 320 derart mit dem serverabhängigen Kommunikationsmodul 330 verknüpft, dass das Betriebsprogrammmodul 310 unter Vermittlung des Schnittstellenprogrammmoduls 320 mit dem Kommunikationsmodul 330 und damit mit dem servereignen Kommunikationsmodul 220 kommunizieren kann.

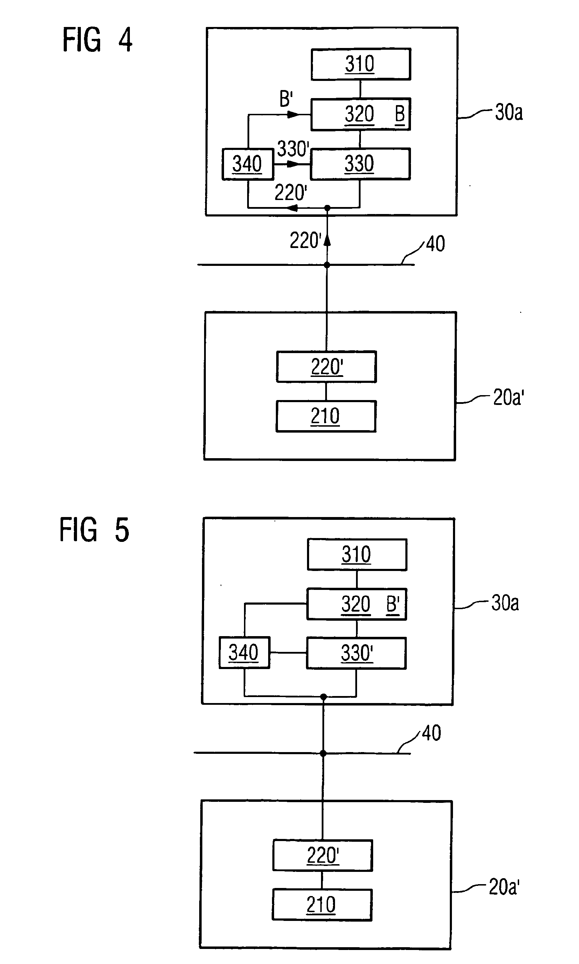

Außerdem erkennt man in der Figur 2, dass das Client-Gerät 30a ein Importmodul 340 aufweist. Wird nun das Server-Gerät 20a durch ein neues Server-Gerät 20a' ersetzt, wie dies in den Figuren 3 bis 5 näher gezeigt ist, so besteht die Funktion des Importmoduls 340 darin, den Austausch des Server-Geräts bzw. den Anschluss des neuen Server-Geräts 20a' zu erkennen und das servereigene Kommunikationsmodul 220' des neuen Server-Geräts 20a' ganz oder in Teilen zu laden (siehe Figur 3). Anschließend wird das Importmodul 340 das alte serverabhängige Kommunikationsmodul 330 durch ein neues serverabhängiges Kommunikationsmodul 330' ersetzen sowie die Bezugsangabe B in dem serverunabhängigen Schnittstellenprogrammmodul 320 an das neue Kommunikationsmodul 330' anpassen (siehe Figur 4). Als Ergebnis erhält man ein umkonfiguriertes Client-Gerät 30a (siehe Figur 5).

Das Importmodul 340 ermöglicht es somit, mit einem minimalen Aufwand eine Aktualisierung bzw. Anpassung des Client-Geräts 30a an das neu zur Verfügung stehende Server-Gerät 20a' durchzuführen bzw. das Client-Gerät 30a entsprechend umzukonfigurieren.

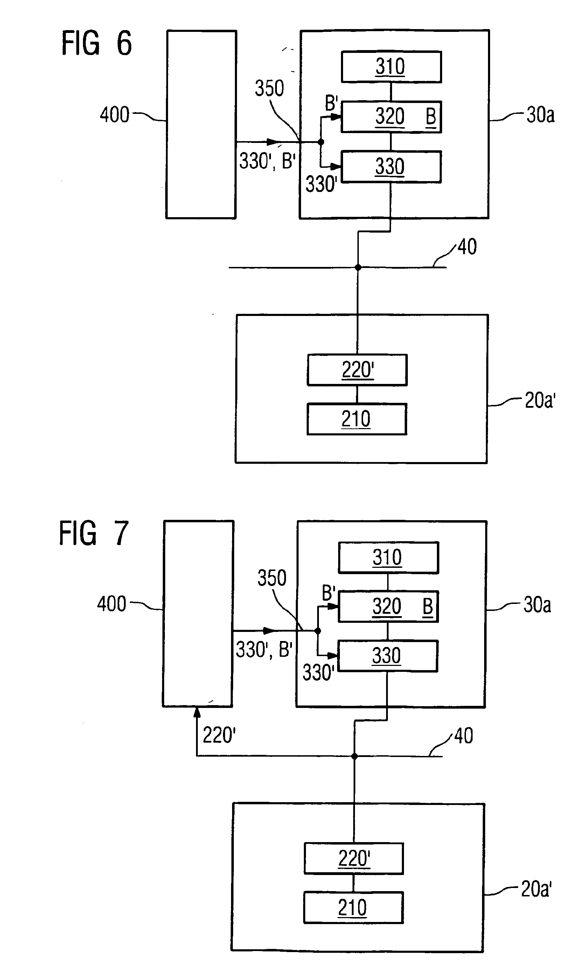

In der Figur 6 ist ein weiteres Ausführungsbeispiel für das Client-Gerät 30a gemäß Figur 1 gezeigt. Bei diesem Ausführungsbeispiel ist das Importmodul 340 gemäß den Figuren 2 bis 5 nicht vorhanden. Um trotzdem eine Aktualisierung des serverabhängigen Kommunikationsmoduls 330 zu ermöglichen, weist das Client-Gerät 30a gemäß Figur 6 eine Eingabeschnittstelle 350 auf, an die ein Konfigurationsgerät, insbesondere ein Konfigurationsrechner, anschließbar ist. Das Konfigurationsgerät ist in der Figur 6 mit dem Bezugszeichen 400 gekennzeichnet.

Wird nun das Server-Gerät 20a durch ein neues Server-Gerät 20a' ersetzt, wie dies in der Figur 6 bereits angedeutet ist, so wird das Konfigurationsgerät 400 ein neues serverabhängiges Kommunikationsmodul 330' über die Eingabeschnittstelle 350 in dem Client-Gerät 30a implementieren sowie die Bezugsangabe B in dem serverunabhängigen Schnittstellenprogrammmodul 320 aktualisieren. Die Umkonfiguration bzw. die Umparametrierung des Client-Geräts 30a erfolgt also bei diesem Ausführungsbeispiel durch das externe Konfigurationsgerät 400, das beispielsweise über eine Programmbibliothek mit einer Vielzahl bekannter serverabhängiger Kommunikationsmodule 330 ausgestattet ist, um die Umparametrierung des Client-Geräts 30a zu ermöglichen.

Alternativ oder zusätzlich kann das Konfigurationsgerät 400 auch in der Lage sein, nach einer Verbindung mit dem neuen Server-Gerät 20a', beispielsweise über das Kommunikationsnetz 40, mit diesem zu kommunizieren und das servereigene Kommunikationsmodul 220' aus dem neuen Server-Gerät 20a' ganz oder in Teilen zu laden, um daraus ein neues serverabhängiges Kommunikationsmodul 330' zu gewinnen und dieses anschließend in dem Client-Gerät 30a zu implementieren. Ein solches Ausführungsbeispiel zeigt die Figur 7.

Vorzugsweise ist das servereigene Kommunikationsmodul 220' derart aufgebaut, dass dieses unmittelbar und ohne weitere Verarbeitung als serverabhängiges Kommunikationsmodul 330' in dem Client-Gerät 30a implementiert werden kann.

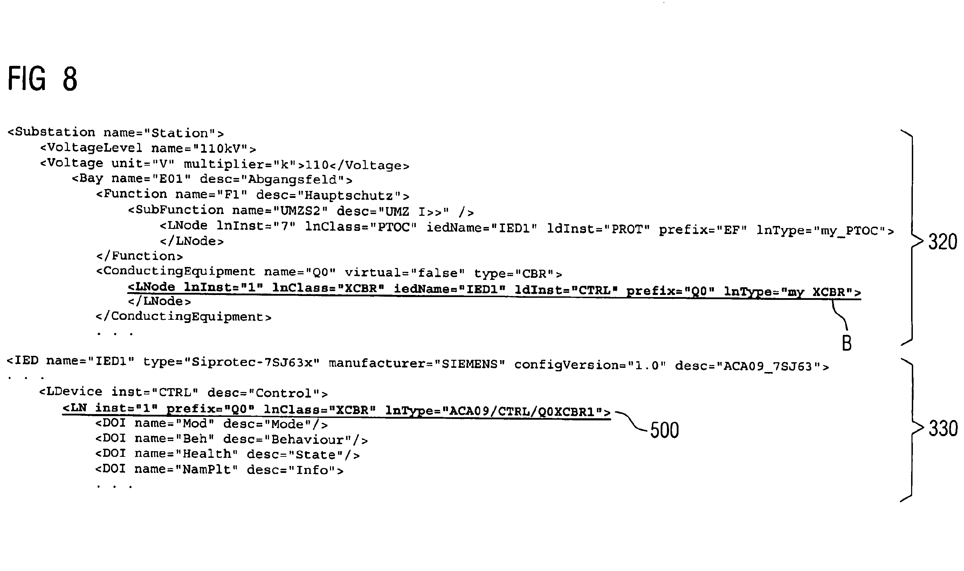

In der Figur 8 ist ein Ausführungsbeispiel für ein serverunabhängiges Schnittstellenprogrammmodul 320, ein Ausführungsbeispiel für eine Bezugsangabe B in dem Schnittstellenprogrammmodul 320 und ein Ausführungsbeispiel für ein serverabhängiges Kommunikationsmodul 330 dargestellt. Man erkennt, dass die Bezugsangabe B in dem serverunabhängigen Schnittstellenprogrammmodul 320 auf ein gerätespezifisches Informationsobjekt 500 innerhalb des geräteabhängigen Kommunikationsmoduls 330 verweist, wodurch eine für die Kommunikation zwischen dem Betriebsprogrammmodul 310 und dem Kommunikationsmodul 330 erforderliche Verknüpfung zwischen dem Schnittstellenprogrammmodul 320 und dem Kommunikationsmodul 330 hergestellt wird.

Das Schnittstellenprogrammmodul 320, das Kommunikationsmodul 330 sowie die Bezugsangabe B sind bei dem Ausführungsbeispiel gemäß Figur 8 im XML-Schema in einer SCD(SCD: Substation Configuration Description)-Datei gemäß IEC 61850-6- Standard hinterlegt. Man erkennt, dass die funktionsbezogene geräteunabhängige Adressierung des serverunabhängigen Schnittstellenprogrammmoduls 320 dem Functional-Naming-Adressierungsschema gemäß IEC 61850-6-Standard und die geräteabhängige Adressierung des serverabhängigen Kommunikationsmoduls 330 dem Product-Naming-Adressierungsschema gemäß IEC 61850-Standard entspricht. Außerdem erkennt man, dass die Bezugsangabe B eine Zuordnung zwischen dem Functional-Naming-Adressierungsschema gemäß IEC 61850-6-Standard und dem Product-Naming-Adressierungsschema gemäß IEC 61850-Standard herstellt.

## Patentansprüche

1. Gerät (30a, 30b) zum Schützen, Steuern oder Überwachen einer elektrischen Schalt- oder Energieversorgungsanlage, wobei das Gerät als Client-Gerät konfigurierbar ist und zu einer Kommunikation mit einem zugeordneten Server-Gerät (20a, 20b, 20c) geeignet ist, wobei
- das Client-Gerät (30a) ein serverunabhängiges Betriebsprogrammmodul (310), ein mit dem Betriebsprogrammmodul verknüpftes serverunabhängiges Schnittstellenprogrammmodul (320) und ein die Adressierungsweise des Server-Geräts (20a, 20b, 20c) beschreibendes serverabhängiges Kommunikationsmodul (330) aufweist, **dadurch gekennzeichnet, dass**
- in das Schnittstellenprogrammmodul (320) eine Bezugsangabe (B) eingebbar ist, die zwischen dem Schnittstellenprogrammmodul (320) und dem Kommunikationsmodul (330) eine Verknüpfung herstellt, mit der eine Kommunikation zwischen dem Betriebsprogrammmodul (310) und dem Kommunikationsmodul (330) unter Vermittlung des Schnittstellenprogrammmoduls (320) ermöglicht wird,
- und dass serverunabhängige Schnittstellenprogrammmodul (320) und das serverabhängige Kommunikationsmodul (330) derart ausgestaltet sind, dass nach einem Ersetzen eines dem Client-Gerät (30a, 30b) zugeordneten Server-Geräts (20a, 20b, 20c) durch ein neues Server-Gerät (20a')
- das in dem Client-Gerät (30a, 30b) vorhandene Kommunikationsmodul (330) durch ein die Adressierungsweise des neuen Server-Geräts beschreibendes neues Kommunikationsmodul (330') und
- in dem serverunabhängigen Schnittstellenprogrammmodul (320) die vorhandene Bezugsangabe (B) durch eine neue, sich auf das neue Kommunikationsmodul beziehende Bezugsangabe (B') ersetzt wird.

2. Client-Gerät nach Anspruch 1, **dadurch gekennzeichnet, dass** das serverunabhängige Schnittstellenprogrammmodul (320) eine funktionsbezogene geräteunabhängige Adressierung und das serverabhängige Kommunikationsmodul (330) eine geräteabhängige Adressierung verwendet und erst durch die Bezugsangabe (B) eine eine Kommunikation ermöglichende, vollständige Adresszuweisung gebildet wird.

3. Client-Gerät nach einem der voranstehenden Ansprüche, **dadurch gekennzeichnet, dass** die funktionsbezogene geräteunabhängige Adressierung des serverunabhängigen Schnittstellenprogrammmoduls (320) auf dem Functional-Naming-Adressierungsschema gemäß IEC 61850-6-Standard basiert.

4. Client-Gerät nach einem der voranstehenden Ansprüche, **dadurch gekennzeichnet, dass** die geräteabhängige Adressierung des serverabhängigen Kommunikationsmoduls (330) auf dem Product-Naming-Adressierungsschema gemäß IEC 61850-Standard basiert.

5. Client-Gerät nach Anspruch 3 und 4, **dadurch gekennzeichnet, dass** die Bezugsangabe (B) geeignet ist, eine Zuordnung zwischen dem Functional-Ivaming-Adressierungsschema gemäß IEC 61850-6-Standard und dem Product-Naming-Adressierungsschema gemäß IEC 61850-Standard zu definieren.

6. Client-Gerät nach einem der voranstehenden Ansprüche, **dadurch gekennzeichnet, dass** in dem Schnittstellenprogrammmodul (320) die Bezugsangabe (B) derart ersetzbar ist, dass das Schnittstellenprogrammmodul (320) im Übrigen unverändert bleibt.

7. Client-Gerät nach einem der voranstehenden Ansprüche, **dadurch gekennzeichnet, dass** das Client-Gerät (30a, 30b) durch ein Leitebenen-Gerät oder ein Feldgerät, insbesondere eine Schutzgerät, einer elektrischen Schalt- oder Energieversorgungsanlage gebildet ist.

8. Client-Gerät nach einem der voranstehenden Ansprüche, **dadurch gekennzeichnet, dass** das Client-Gerät ein Importmodul (340) aufweist, das geeignet ist, einen Anschluss eines neuen Server-Geräts (20a') zu erkennen, ein servereigenes Kommunikationsmodul (220) des neuen Server-Geräts (20a') ganz oder in Teilen zu laden, das serverabhängige Kommunikationsmodul (330) des Client-Geräts durch ein neues serverabhängiges Kommunikationsmodul (330') zu ersetzen und die Bezugsangabe (B) in dem serverunabhängigen Schnittstellenprogrammmodul (320) an das neue Kommunikationsmodul (330') anzupassen.

9. Client-Gerät nach einem der voranstehenden Ansprüche, **dadurch gekennzeichnet, dass** das Client-Gerät ein Eingabeschnittstelle (350) aufweist, die es ermöglicht, vor, nach oder während eines Anschlusses eines neuen Server-Geräts (20a') ein neues Kommunikationsmodul (330') zur Kommunikation mit dem neuen Server-Gerät (20a') von außen einzuspeisen und/oder die Bezugsangabe (B) in dem serverunabhängigen Schnittstellenprogrammmodul (320) an das neue Kommunikationsmodul (330') von außen anzupassen.

10. Anordnung mit einem Client-Gerät nach einem der voranstehenden Ansprüche und einem mit dem Client-Gerät (30a, 30b) verbundenen zumindest einen Server-Gerät (20a, 20b, 20c), **dadurch gekennzeichnet, dass** das Server-Gerät ein servereigenes Kommunikationsmodul (220) aufweist, das von dem Client-Gerät (30a) ganz oder in Teilen auslesbar oder kopierbar ist.

11. Anordnung nach Anspruch 10, **dadurch gekennzeichnet, dass** das Server-Gerät (20a, 20b, 20c) durch ein Leitebenengerät oder ein Feldgerät, insbesondere ein Schutzgerät, einer Schalt- oder Energieversorgungsanlage gebildet ist.

12. Verfahren zum Betreiben einer Anordnung, insbesondere einer Anordnung zum Schützen oder Leiten einer elektrischen Schalt- oder Energieversorgungsanlage, mit einem Client-Gerät (30a, 30b) und zumindest einem mit diesem verbundenen Server-Gerät (20a, 20b, 20c), wobei bei dem Verfahren das Server-Gerät (20a, 20b, 20c) durch ein neues Server-Gerät (20a') ersetzt und die Anordnung mit diesem neuen Server-Gerät (20a') weiter betrieben wird, wobei
- in dem Client-Gerät (30a, 30b) ein serverunabhängiges Betriebsprogrammmodul (310), ein mit dem Betriebsprogrammmodul (310) verknüpftes serverunabhängiges Schnittstellenprogrammmodul (320) und ein die Adressierungsweise des Server-Geräts (20a, 20b, 20c) beschreibendes serverabhängiges Kommunikationsmodul (330) betrieben wird, **dadurch gekennzeichnet, dass** in das Schnittstellenprogrammmodul (320) eine Bezugsangabe (B) eingegeben worden ist, die zwischen dem Schnittstellenprogrammmodul (320) und dem Kommunikationsmodul (330) eine Verknüpfung herstellt, mit der eine Kommunikation zwischen dem Betriebsprogrammmodul (310) und dem Kommunikationsmodul (330) unter Vermittlung des Schnittstellenprogrammmoduls (320) ermöglicht wird, und dass
- nach dem Ersetzen des Server-Geräts (20a, 20b, 20c) durch das neue Server-Gerät (20a') das in dem Client-Gerät (30a,30b) vorhandene Kommunikationsmodul (330) durch ein die Adressierungsweise des neuen Server-Geräts (20a') beschreibendes neues Kommunikationsmodul (330') ersetzt wird und
- in dem serverunabhängigen Schnittstellenprogrammmodul (320) die Bezugsangabe (B) durch eine neue, sich auf das neue Kommunikationsmodul (330') beziehende Bezugsangabe (B') ersetzt wird.

13. Verfahren nach Anspruch 12, **dadurch gekennzeichnet, dass** bei dem Ersetzen der Bezugsangabe (B) in dem Schnittstellenprogrammmodul (320) das Schnittstellenprogrammmodul (320) im Übrigen unverändert gelassen wird.

14. Verfahren nach Anspruch 12 oder 13, **dadurch gekennzeichnet, dass** als Client-Gerät (30a, 30b) ein Leitebenen-Gerät einer elektrischen Schalt- oder Energieversorgungsanlage und als Server-Gerät (20a, 20b, 20c) ein Feldgerät, insbesondere ein Schutzgerät, derselben Schalt- oder Energieversorgungsanlage betrieben wird und das Feldgerät in der beschriebenen Weise durch ein neues Feldgerät ersetzt wird.

15. Verfahren nach Anspruch 12 oder 13, **dadurch gekennzeichnet, dass** als Client-Gerät ein Feldgerät, insbesondere ein Schutzgerät, einer elektrischen Schalt- oder Energieversorgungsanlage und als Server-Gerät ein Leitebenen-Gerät derselben Schalt- oder Energieversorgungsanlage betrieben wird und das Leitebenen-Gerät in der beschriebenen Weise durch ein neues Leitebenen-Gerät ersetzt wird.

16. Verfahren nach Anspruch 12 oder 13, **dadurch gekennzeichnet, dass** als Client-Gerät ein Feldgerät, insbesondere ein Schutzgerät, einer elektrischen Schalt- oder Energieversorgungsanlage und als Server-Gerät ebenfalls ein Feldgerät, insbesondere ebenfalls ein Schutzgerät, derselben Schalt- oder Energieversorgungsanlage betrieben wird und eines der Feldgeräte in der beschriebenen Weise durch ein neues Feldgerät ersetzt wird.

17. Verfahren nach Anspruch 12 oder 13, **dadurch gekennzeichnet, dass** als Client-Gerät ein Leitebenen-Gerät einer elektrischen Schalt- oder Energieversorgungsanlage und als Server-Gerät ebenfalls ein Leitebenen-Gerät derselben Schalt- oder Energieversorgungsanlage betrieben wird und eines der Leitebenen-Geräte in der beschriebenen Weise durch ein neues Leitebenen-Gerät ersetzt wird.

## Claims

1. Appliance (30a, 30b) for protecting, controlling or monitoring an electrical switchgear or energy supply system, the appliance being able to be configured as a client appliance and being suitable for communication with an associated server appliance (20a, 20b, 20c),
- the client appliance (30a) having a server-independent operating program module (310), a server-independent interface program module (320) which is linked to the operating program module, and a server-dependent communication module (330) which describes the addressing mode of the server appliance (20a, 20b, 20c), **characterized in that**
- a reference (B) which establishes a link between the interface program module (320) and the communication module (330) is able to be input to the interface program module (320), which link enables communication between the operating program module (310) and the communication module (330) by switching the interface program module (320),
- and **in that** the server-independent interface program module (320) and the server-dependent communication module (330) are configured in such a manner that, after a server appliance (20a, 20b, 20c) associated with the client appliance (30a, 30b) has been replaced with a new server appliance (20a'),
- the communication module (330) in the client appliance (30a, 30b) can be replaced with a new communication module (330') which describes the addressing mode of the new server appliance, and
- the reference (B) in the server-independent interface program module (320) can be replaced with a new reference (B') which refers to the new communication module.

2. Client appliance according to Claim 1,
**characterized in that**
the server-independent interface program module (320) uses function-related appliance-independent addressing and the server-dependent communication module (330) uses appliance-dependent addressing, and complete address allocation which enables communication is formed only by the reference (B).

3. Client appliance according to one of the preceding claims,
**characterized in that**
the function-related appliance-independent addressing of the server-independent interface program module (320) is based on the functional naming addressing scheme according to the IEC 61850-6 standard.

4. Client appliance according to one of the preceding claims,
**characterized in that**
the appliance-dependent addressing of the server-dependent communication module (330) is based on the product naming addressing scheme according to the IEC 61850 standard.

5. Client appliance according to Claims 3 and 4,
**characterized in that**
the reference (B) is suitable for defining an association between the functional naming addressing scheme according to the IEC 61850-6 standard and the product naming addressing scheme according to the IEC 61850 standard.

6. Client appliance according to one of the preceding claims,
**characterized in that**
the reference (B) can be replaced in the interface program module (320) in such a manner that the interface program module (320) otherwise remains unchanged.

7. Client appliance according to one of the preceding claims,
**characterized in that**
the client appliance (30a, 30b) is formed by a control level appliance or a field device, in particular a protective appliance, of an electrical switchgear or energy supply system.

8. Client appliance according to one of the preceding claims,
**characterized in that**
the client appliance has an import module (340) which is suitable for detecting connection of a new server appliance (20a'), for loading all or parts of the new server appliance's (20a') own communication module (220), for replacing the server-dependent communication module (330) of the client appliance with a new server-dependent communication module (330') and for adapting the reference (B) in the server-independent interface program module (320) to the new communication module (330').

9. Client appliance according to one of the preceding claims,
**characterized in that**
the client appliance has an input interface (350) which makes it possible, before, after or during connection of a new server appliance (20a'), to externally supply a new communication module (330') for communication with the new server appliance (20a') and/or to externally adapt the reference (B) in the server-independent interface program module (320) to the new communication module (330').

10. Arrangement having a client appliance according to one of the preceding claims, and having at least one server appliance (20a, 20b, 20c) which is connected to the client appliance (30a, 30b),
**characterized in that**
the server appliance has its own communication module (220), all or parts of which can be read or copied by the client appliance (30a).

11. Arrangement according to Claim 10,
**characterized in that**
the server appliance (20a, 20b, 20c) is formed by a control level appliance or a field device, in particular a protective appliance, of a switchgear or energy supply system.

12. Method for operating an arrangement, in particular an arrangement for protecting or controlling an electrical switchgear or energy supply system, having a client appliance (30a, 30b) and at least one server appliance (20a, 20b, 20c) which is connected to the latter, the server appliance (20a, 20b, 20c) being replaced with a new server appliance (20a') and the arrangement continuing to be operated with this new server appliance (20a') in the method,
- a server-independent operating program module (310), a server-independent interface program module (320) which is linked to the operating program module (310) and a server-dependent communication module (330) which describes the addressing mode of the server appliance (20a, 20b, 20c) being operated in the client appliance (30a, 30b), **characterized in that** a reference (B) which establishes a link between the interface program module (320) and the communication module (330) has been input to the interface program module (320), which link enables communication between the operating program module (310) and the communication module (330) by switching the interface program module (320), and **in that**
- after the server appliance (20a, 20b, 20c) has been replaced with the new server appliance (20a'), the communication module (330) in the client appliance (30a, 30b) is replaced with a new communication module (330') which describes the addressing mode of the new server appliance (20a'), and
- the reference (B) in the server-independent interface program module (320) is replaced with a new reference (B') which refers to the new communication module (330').

13. Method according to Claim 12,
**characterized in that,**
when replacing the reference (B) in the interface program module (320), the interface program module (320) is otherwise left unchanged.

14. Method according to Claim 12 or 13,
**characterized in that**
a control level appliance of an electrical switchgear or energy supply system is operated as the client appliance (30a, 30b) and a field device, in particular a protective appliance, of the same switchgear or energy supply system is operated as the server appliance (20a, 20b, 20c), and the field device is replaced with a new field device in the manner described.

15. Method according to Claim 12 or 13,
**characterized in that**
a field device, in particular a protective appliance, of an electrical switchgear or energy supply system is operated as the client appliance and a control level appliance of the same switchgear or energy supply system is operated as the server appliance, and the control level appliance is replaced with a new control level appliance in the manner described.

16. Method according to Claim 12 or 13,
**characterized in that**
a field device, in particular a protective appliance, of an electrical switchgear or energy supply system is operated as the client appliance and a field device, in particular likewise a protective appliance, of the same switchgear or energy supply system is likewise operated as the server appliance, and one of the field devices is replaced with a new field device in the manner described.

17. Method according to Claim 12 or 13,
**characterized in that**
a control level appliance of an electrical switchgear or energy supply system is operated as the client appliance and a control level appliance of the same switchgear or energy supply system is likewise operated as the server appliance, and one of the control level appliances is replaced with a new control level appliance in the manner described.

## Revendications

1. Appareil ( 30a, 30b ) pour protéger, commander ou contrôler un système électrique de commutation ou d'alimentation en courant, l'appareil pouvant être configuré en appareil client et étant approprié à une communication avec un appareil serveur ( 20a, 20b ) associé, dans lequel
- l'appareil client ( 30a ) a un module ( 310 ) de programme de service indépendant du serveur, un module ( 320 ) de programme d'interface relié au module de programme de service et indépendant du serveur et un module ( 330 ) de communication dépendant du serveur et décrivant le mode d'adressage de l'appareil ( 20a, 20b, 20c ), **caractérisé en ce que**
- dans le module ( 320 ) de programme d'interface peut être introduite une indication ( B ) de référence, qui ménage, entre le module ( 320 ) de programme d'interface et le module ( 330 ) de communication, une liaison par laquelle une communication entre le module ( 310 ) de programme de service et le module ( 330 ) de communication est rendue possible par l'intermédiaire du module ( 320 ) de programme d'interface,
- et **en ce que** le module ( 320 ) de programme d'interface indépendant du serveur et le module ( 330 ) de communication dépendant du serveur sont tels qu'après un remplacement d'un appareil serveur ( 20a, 20b, 20c ) associé à l'appareil client ( 30a, 30b ) par un nouvel appareil appareil serveur ( 20a' ),
- le module ( 330 ) de communication présent dans l'appareil client ( 30a, 30b ) est remplacé par un nouveau module ( 330' ) de communication décrivant le mode d'adressage du nouvel serveur et,
- dans le module ( 320 ) de programme d'interface indépendant du serveur, l'indication ( B ) de référence présente est remplacée par une nouvelle indication ( B' ) de référence se rapportant au nouveau module de communication.

2. Appareil client suivant la revendication 1,
**caractérisé en ce que**
le module ( 320 ) de programme d'interface indépendant du serveur utilise un adressage rapporté à la fonction et indépendant de l'appareil et le module ( 330 ) de communication dépendant du serveur utilise un adressage dépendant de l'appareil et ce n'est que par l'indication ( B ) de référence qu'il est formée une affectation d'adresse complète permettant une communication.

3. Appareil client suivant l'une des revendications précédentes,
**caractérisé en ce que** l'adressage rapporté à une fonction et indépendant de l'appareil du module ( 320 ) de programme d'inferface indépendant du serveur repose sur le schéma d'adressage fonctionnal naming suivant la norme IEC 61850-6.

4. Appareil client suivant 1"une des revendications précédentes,
**caractérisé en ce que** l'adressage, dépendant de l'appareil, du module ( 330 ) de communication dépendant du serveur repose sur le schéma d'adressage product-naming suivant la norme IEC 61850.

5. Appareil client suivant la revendication 3 et 4, **caractérisé en ce que** l'indication ( B ) de référence est appropriée pour définir une association entre le schéma d'adressage fonctionnal naming suivant la norme IEC 61850-6 et le schéma d'adressage product-naming suivant la norme IEC 61850.

6. Appareil client suivant 1"une des revendications précédentes,
**caractérisé en ce que** dans le module ( 320 ) de programme d'interface l'indication ( B ) de référence peut être remplacée de manière à ce que pour le reste le module ( 320 ) de programme d'interface reste inchangé.

7. Appareil client suivant 1"une des revendications précédentes,
**caractérisé en ce que** l'appareil client ( 30a, 30b ) est formé par un appareil de conduite ou par un appareil de terrain, notamment un appareil de protection d'un système électrique de commutation ou d'alimentation en courant.

8. Appareil client suivant 1"une des revendications précédentes,
**caractérisé en ce que** l'appareil client a un module ( 340 ) d'importation qui est propre à détecter une connexion d'un nouvel appareil serveur ( 20a' ), à charger, en toute ou partie, un module ( 220 ) de communication propre au serveur du nouvel appareil serveur ( 20a' ), à remplacer le module ( 330 ) de communication, dépendant du serveur, de l'appareil client par un nouveau module ( 330' ) de communication dépendant du serveur et à adapter l'indication ( B ) de référence dans le module ( 320 ) de programme d'interface indépendant du serveur au nouveau module ( 330' ) de communication.

9. Appareil client suivant l'une des revendications précédentes,
**caractérisé en ce que** l'appareil client a une interface ( 350 ) d'acquisition qui permet avant, après ou pendant une connexion d'un nouvel appareil serveur ( 20a' ), d'introduire de l'extérieur un nouveau module ( 330' ) de communication pour la communication avec le nouvel appareil serveur ( 20a' ) et/ou d'adapter de l'extérieur l'indication ( B ) de référence dans le module ( 320 ) de programme d'interface indépendant du serveur au nouveau module ( 330' ) de communication.

10. Agencement comprenant un appareil client suivant l'une des revendications précédentes et au moins un appareil serveur ( 20a, 20b, 20c ) relié à l'appareil client ( 30a, 30b ), **caractérisé en ce que** l'appareil serveur a un module ( 220 ) de communication propre au serveur, qui peut être lu ou qui peut être copié en toute ou partie par l'appareil client ( 30a ).

11. Agencement suivant la revendication 10,
**caractérisé en ce que**
l'appareil serveur ( 20a, 20b, 20c ) est formé par un appareil de conduite ou par un appareil de terrain, notamment par un appareil de protection d'un système de commutation ou d'alimentation en courant.

12. Procédé pour faire fonctionner un agencement, notamment un agencement pour conduire ou pour protéger un système électrique de commutation ou d'alimentation en courant, comprenant un appareil client ( 30a, 30b ) et au moins un serveur ( 20a, 20b, 20c ) relié à celui-ci, dans lequel dans le procédé l'appareil serveur ( 20a, 20b, 20c ) est remplacé par un nouvel appareil serveur ( 20a' ) et l'agencement continue à fonctionner avec ce nouvel appareil serveur ( 20a' ), dans lequel
- on fait fonctionner dans l'appareil client ( 30a, 30b ) un module ( 310 ) de programme de service indépendant du serveur, un module ( 320 ) de programme d'interface relié au module ( 310 ) de programme de service et indépendant du serveur et un module ( 330 ) de communication décrivant le mode d'adressage de l'appareil serveur ( 20a, 20b, 20c ) et dépendant du serveur, **caractérisé en ce que** dans le module ( 320 ) de programme d'interface il a été entré une indication ( B ) de référence, qui ménage entre le module ( 320 ) de programme d'interface et le module ( 330 ) de communication une liaison par laquelle une communication entre le module ( 310 ) de programme de service et le module ( 330 ) de communication est rendue possible par l'intermédiaire du module ( 320 ) de programme d'interface, et **en ce que**
- après le remplacement de l'appareil serveur ( 20a, 20b, 20c ) par le nouvel appareil serveur ( 20a' ), le module ( 330 ) de communication présent dans 1"appareil client ( 30a, 30b ) est remplacé par un nouveau module ( 330' ) de communication décrivant le mode d'adressage du nouvel appareil serveur ( 20a' ) et
- dans le module ( 320 ) de programme d'interface indépendant du serveur, 1"indication ( B ) de référence est remplacée par une nouvelle indication ( B' ) de référence se rapportant au nouveau module ( 330' ) de communication.

13. Procédé suivant la revendication 12,
**caractérisé en ce que**, lors du remplacement de l'indication ( B ) de référence dans le module ( 320 ) de programme d'interface, on laisse inchangé pour le reste le module ( 320 ) de programme d'interface.

14. Procédé suivant la revendication 12 ou 13,
**caractérisé en ce qu'**on fait fonctionner, comme appareil client ( 30a, 30b ), un appareil de conduite d'un système électrique de commutation ou d'alimentation en courant et, comme appareil serveur ( 20a, 20b, 20c ), un appareil de terrain, notamment un appareil de protection du même système de commutation ou d'alimentation en courant et on remplace l'appareil de terrain de la façon décrite par un nouvel appareil de terrain.

15. Procédé suivant la revendication 12 ou 13,
**caractérisé en ce qu'**on fait fonctionner, comme appareil client, un appareil de terrain, notamment un appareil de protection d'un système électrique de commutation ou d'alimentation en énergie et, comme appareil serveur un appareil de conduite du même système de commutation ou d'alimentation en courant et **en ce qu'**on remplace l'appareil de conduite de la façon décrite par un nouvel appareil de conduite.

16. Procédé suivant la revendication 12 ou 13,
**caractérisé en ce que** l'on fait fonctionner, comme appareil client, un appareil de terrain, notamment un appareil de protection d'un système électrique de commutation ou d'alimentation en énergie et, comme appareil serveur, également un appareil de terrain, notamment également un appareil de protection du même système de commutation ou d'alimentation en courant et on remplace l'un des appareils de terrain de la façon décrite par un nouvel appareil de terrain.

17. Procédé suivant la revendication 12 ou 13,
**caractérisé en ce que** l'on fait fonctionner, comme appareil client, un appareil de conduite d'un système électrique de commutation ou d'alimentation en courant et, comme appareil serveur, également un appareil de conduite du même système de commutation ou d'alimentation en courant et on remplace l'un des appareils de conduite de la façon décrite par un nouvel appareil de conduite.
